# EUROPEAN PATENT SPECIFICATION

(11) **EP 3 346 847 B1**
(45) Date of publication and mention of the grant of the patent: **30.10.2024**
(21) Application number: 15798576.3
(22) Date of filing: 11.09.2015
(51) Int. Cl.: A23B 7/04, B65D 81/34

(54) **PROCESS FOR OBTAINING A FROZEN PACKAGED AGRICULTURAL FOOD PRODUCT**
VERFAHREN ZUM ERHALT EINES GEFRORENEN VERPACKTEN LANDWIRTSCHAFTLICHEN NAHRUNGSMITTELPRODUKTS
PROCÉDÉ D'OBTENTION D'UN PRODUIT ALIMENTAIRE AGRICOLE CONGELÉ EMBALLÉ

(43) Date of publication of application: 18.07.2018
(73) Proprietor: Industrie Rolli Alimentari S.p.A., 64026 Roseto degli Abruzzi (Teramo) (IT)
(72) Inventor: ROLLI, Gian Paolo, 43035 FELINO, Frazione S. Michele di Tiorre (IT)
(74) Representative: Modiano, Micaela Nadia
(86) International application number: PCT/IT2015/000223
(87) International publication number: WO 2017/042844

(56) References cited:
- EP-A1- 2 277 802
- EP-A1- 2 502 846
- WO-A1-2009/055051
- US-A- 4 746 019
- US-A1- 2005 042 360
- US-A1- 2006 006 111
- US-A1- 2007 148 306
- TICHA JANA ET AL: "Safe apples for baby-food production: Survey of pesticide treatment regimes leaving minimum residues", FOOD ADDITIVES AND CONTAMINANTS, vol. 24, no. 6, 1 June 2007 (2007-06-01), GB, pages 605 - 620, XP093100375, ISSN: 0265-203X, DOI: 10.1080/02652030601013703

## Description

The present invention relates to a process for obtaining a frozen packaged agricultural food product characterized in that it comprises frozen vegetables and mushrooms.

It is known that food habits and consumption ways of individuals have changed considerably in recent years.

In particular, the reduction of the time available to dedicate to the preparation of meals has caused greater interest in frozen products, even in predefined portions, by way of which it is possible to optimize the management of one's own food requirement, avoiding waste and reducing cooking times by using a microwave oven.

EP 2 502 846 discloses a packaged food product for children.

Moreover, greater awareness of the importance of healthy eating has led to greater attention of the consumer to the healthiness of the products consumed and to their origin, which is an assurance of their quality.

Ticha et al., in Food Additives and Contaminants, June 7, 2006 (605 -620) disclose a survey of pesticide treatment regimens leaving minimum residues with the aim of supplying safe apples for baby-food production.

Moreover, one should not neglect the fact that consumer choices are influenced, particularly in recent times, also by the impact that the production, packaging and consumption of a given product can have on the environment.

For these reasons, research into healthy food products of high quality, adapted to be cooked by using a microwave oven, and to have packages made of materials with reduced environmental impact and suitable to be introduced in a microwave oven, is becoming increasingly intense.

The aim of the present invention is to solve the problems described above, by providing a process for obtaining a frozen packaged agricultural food product, characterized in that it comprises frozen vegetables and mushrooms, the production and use of which has a reduced environmental impact.

Within this aim, an object of the invention is to provide a a process for obtaining a frozen packaged agricultural food product, characterized in that it comprises frozen vegetables and mushrooms, by adopting an agro-industrial process with minimal environmental impact suitable to minimize industrial waste.

Another object of the invention is to provide a process for obtaining a frozen packaged agricultural food product. characterized in that it comprises frozen vegetables and mushrooms, that has a recyclable package with reduced environmental impact.

A further object of the present invention is to provide a process for obtaining a frozen packaged agricultural food product characterized in that it comprises frozen vegetables and mushrooms, that has a low cost, is relatively simple to provide in practice and is safe in application.

This aim, as well as these and other objects that will become better apparent hereinafter, are achieved, according to the instant invention, by the process set out in appended claim 1. Preferred embodiments of the invention are set out in the dependent claims 2-7.

This aim and these objects are also achieved by way of the method of consuming a frozen packaged agricultural food product according to appended claim 8.

Further characteristics and advantages of the invention will become better apparent from the description below.

The process for producing the frozen packaged agricultural food product, characterized in that it comprises frozen vegetables and mushrooms, according to the invention comprises the following steps:
- performing a preventive chemical, physical and pedologic analysis of the soils intended for cultivation, in order to identify at least partially their composition, humidity and temperature and verify the absence of pathogens, infesting organisms and pollutants;
- selecting, among natural seeds and mycelia, not genetically modified, the ones that are most suitable for the soil parameters identified previously;
- performing iterated periodic checks of the cultivated vegetables and mushrooms, which grow after seeding, in order to detect diseases and/or infestations thereof;
- circumscribing any plant protection treatment, to limited areas or minimizing the dosage thereof in view of the minimal incidence of the disease or infestation on the vegetables and mushrooms by using active ingredients selected among insecticides, herbicides, acaricides, limacides and fungicides;
- proximate to the harvest period, performing iterated periodic spot checks of the cultivated vegetables and mushrooms in order to measure the residual concentration of active plant protection ingredients;
- upon detection of the residual concentration of each active plant protection ingredient lower than a predefined threshold of 0.01 mg/kg, harvesting the cultivated vegetables and mushrooms,
- subjecting the vegetables and mushrooms to a thermo-mechanical treatment for the separation of an intermediate product, which has a residual concentration of each active plant protection ingredient lower than the predefined threshold, from a waste intended for an industrial transformation with low environmental impact;
- placing the intermediate product within a container constituted at least partially by at least one material selected among ethylene vinyl alcohols (EVOH), polyamide (PA), polyethylene (PE), lignin, Cartene, corn-derived polymers plant- derived cellulose, paper, cardboard, said container being of a type that can be recycled at least partially, is resistant to microwaves and therefore suitable to be used as a cooking vessel and as a plate in which said vegetables contained therein are consumed after microwave cooking,
- thereby obtaining a packaged agricultural food product, and
- applying a freezing step.

The thermo-mechanical treatment can comprise steps for cooking, even partial cooking, and deep freezing of the vegetables and mushrooms. It is useful to specify that the container can be at least partially constituted by ethylene vinyl alcohols (EVOH), polyamide (PA), polyethylene (PE) in order to render the container recyclable.

The possibility is not excluded, however, that the container might be constituted at least partially by lignin, Cartene, corn-derived polymers, cellulose (plant-derived), in order to render the container compostable.

According to a solution that is particularly effective and efficient the process of the instant invention comprises a series of consecutive steps, some of which are reiterated according to specific cycles.

First of all, it is necessary to perform a preventive chemical, physical and pedologic analysis of the soils intended for cultivation, in order to identify at least partially their composition, humidity and temperature and verify the absence of pathogens, infesting organisms and pollutants.

According to the invention, therefore, during all the steps of cultivation, including those that precede seeding, a technical agricultural engineer must perform several inspections in the field.

In particular, preventive analyses of the soil consist in verifying the physical-chemical conditions of the soils.

The fields for the cultivations must therefore be selected by avoiding the presence, in the vicinity, of potentially polluting sites, verifying the texture of the soils, their slope, the availability of water and trying to minimize the distance from the processing facility.

In order to optimize production, optional preventive weeding and/or fertilization operations are also provided: these steps, also, must take into account the need to minimize the introduction in the environment of harmful substances, and are therefore performed by using herbicides and/or fertilizers that have a low environmental impact and can be absorbed by the soil, leaving negligible residual quantities of potentially pollutant substances (in any case lower than predefined threshold values). One then proceeds by selecting, among natural seeds and mycelia, not genetically modified, the ones that are most suitable for the soil parameters identified previously.

The seeds used, as well as the mycelia of the mushrooms, must be selected among the varieties specifically identified by the wording "GMO FREE". Moreover, they must have specific varietal characteristics that make them suitable to obtain the maximum harvest yield and limit the need for treatments: to obtain such characteristics, it is necessary to identify the seeds (or mycelia) that are most suited for the characteristics of the soil in which they will be placed; each individual type of seed and/or mycelium ensures the best yield if placed in a soil that has given characteristics. The pairing of a specific seed (mycelium) with a respective soil therefore allows to ensure optimum productivity and also to ensure a high quality standard of the vegetables (mushrooms) at the end of the cultivation. It is evident that plants or mushrooms that can grow in an ideal environment (from a chemical, physical and pedologic profile) are less subject to diseases, infections and infestations and therefore allow to minimize the use of pesticides.

Moreover, the selection of the particular variety (or mycelium) is aimed at ensuring the adequacy of the vegetable product (mushroom) that can be obtained with reference to the intended purpose of use (e.g., choice of specific varieties of vegetables to be correctly processed and transformed in an industrial environment).

In this case also, it is specified that the choice of the fertilizer is suitable to ensure that the seeds (mycelia) are in an environment that corresponds as much as possible to the ideal environment (from a chemical, physical and pedologic standpoint) expected by the manufacturer (and/or by the breeder, in the case of new varieties of vegetables).

Once the seeding step has ended, a specialized engineer must perform iterated periodic checks of the vegetables and/or mushrooms, which grow after seeding, in order to detect diseases and/or infestations of the vegetables.

Performing periodic checks, at short intervals, of the cultivations allows to identify promptly the presence of diseases and/or infestations and to circumscribe any plant protection treatments to limited areas, or to minimize the dosage thereof in view of the minimal incidence of the disease or infestation on the vegetables and mushrooms.

For the reasons listed above it is therefore necessary, according to claim 1, to perform at least one plant protection treatment by using active ingredients selected among insecticides, herbicides, acaricides, limacides and fungicides.

Such treatments allow to maximize productivity (since they protect the vegetables and mushrooms being cultivated against damage that might be generated by diseases and/or infestations).

Timeliness in performing the plant protection treatment in the steps of first onset (even just sporadic and localized) of diseases and/or infestations also allows to limit the diffusion thereof, also allowing to subject to the treatment only the affected areas, avoiding any contact with plant protection products of the regions that are not affected.

Proximate to the harvest period, it is further necessary to perform iterated periodic spot checks of the vegetables and/or mushrooms in order to measure the residual concentration of active plant protection ingredients.

Upon detections of the residual concentration of active plant protection ingredients lower than 0.01 mg/kg, it is possible to harvest the cultivated vegetables, mushrooms.

With particular reference to the threshold value described so far by way of example, it is important that harvesting occurs at the maturation of the vegetable after verifying that the plant protection residues are below 0.01 mg/kg.

It should be noted that some vegetables have specific behaviors that must be assessed by the specialized engineer in order to select the best moment for harvesting (optionally also as a function of the weather conditions, of the night-day cycle and of the seasonal cycle).

Periodic checks comprise a representative sampling of the harvesting field performed by a technical agricultural engineer and an analysis aimed at verifying any presence of a large number of active ingredients (over 400): each one of these active ingredients must be below the predefined threshold, that is equal to 0.01 mg/kg (0.01 ppm). The decision to proceed or not with harvesting is assigned exclusively to the technical agricultural engineer, who will authorize it only when the tests confirm the presence, in the cultivated vegetables and mushrooms, of a residue of active plant protection ingredients lower than the predefined threshold, that is equal to 0.01 mg/kg.

It is convenient, in terms of the optimum application of the method according to the invention, for the operations for measuring the residual concentration of active plant protection ingredients to be performed in a laboratory in which there are gas chromatographs with various detectors selected from BCD, NPD, and FD, gas chromatographs coupled to mass spectrometers, liquid chromatographs with spectrophotometric diode array detectors and/or coupled to mass spectrometers of the UPLC-MS (Ultra Performance Liquid Chromatography - Mass Spectrometry) type and atomic absorption spectrophotometers HPLC (High Performance Liquid Chromatography).

The analyses prescribed by the periodic checks are performed, therefore, at qualified laboratories that ensure the reliability of each analytical data item.

It is deemed useful to specify that according to the invention, only upon the non-detectability of residues of active ingredients (or in any case upon a detection that is below the predefined threshold value of 0.01 mg/kg) is it possible to classify the vegetables and/or mushrooms with the definition "without residual pesticides".

It is appropriate to specify that in addition to pesticides, nitrates and heavy metals, depending on the type of crops, also can be analyzed in order to minimize their presence on the harvest.

Moreover, in order to render traceable each batch of frozen packaged agricultural food product derived from a harvest obtained by applying the agronomic method described above, all the data related to each step are catalogued in a specific database and associated with a respective identification string that is provided on the containers with which the product, vegetable and/or mushroom, will be marketed.

Full traceability of the product in terms of cultivation site, seeds used, treatments performed, etc., i.e., all the detail information required to give assured indications as to the origin of the product, is in fact provided for vegetables, mushrooms classified also as "without residual pesticides".

It is specified that even after harvesting, the vegetable and/or mushroom must be treated and transformed with precautions adapted to prevent any possible contamination in subsequent steps until it is sold. The purpose of this additional precaution in the final steps of the preparation of the product that will be sold is necessary *so that* the product *can* retain the "without residual pesticides" qualification, i.e., so that the product on sale also has a pesticide residue below the limit of 0.01 mg/kg , even if it is used as an ingredient in a finished product constituted by a plurality of different ingredients (e.g., ready-made dishes based on vegetables with rice, spelt; etc.).

All the other ingredients must therefore have a pesticide residue lower than the threshold value.

It is specified that the frozen vegetables can be of the Liliaceae type (such as for example garlic, onion, asparagus, etc.), Solanaceae (such as tomatoes, peppers, potatoes, etc.), Umbelliferae (such as carrots, fennel, etc.), Asteraceae (such as artichoke, chicory, etc.), Lamiaceae (such as for example basil), Brassicaceae (such as savoy cabbage, broccoli, etc.), Cucurbitaceae (such as for example pumpkin, zucchini, etc.), Leguminosae (such as peas, broad beans, etc.) and Chenopodiaceae (such as spinach, beets, etc.).

Any frozen mushrooms used can be of the Agaricaceae type, such as for example champignon mushrooms.

The waste produced by the thermo-mechanical treatment to which the vegetables are subjected can be intended for a fermentation tank of a biogas production unit.

This waste in the fermentation tank of the biogas production unit is converted into digestate used as fertilizer on the respective cultivation soil in a new step of cultivation of vegetable products.

The digestate can comprise a liquid phase and a solid phase.

The liquid phase can comprise ammonia nitrogen, N-NH4 , phosphoric acid, H3 PO4, phosphorus ions and salts, potassium ions and salts, calcium ions and salts, magnesium ions and salts, sulfates and trace elements.

The solid phase can comprise ammonia nitrogen.

It is useful to specify that in the process for use of the digestate only the solid phase is used as fertilizer, while the liquid part is partly returned to the tank in order to feed a new fermentation process.

The use of digestates instead of chemical fertilizers improves both the environmental balance and the energy balance, also causing a substantial cost reduction.

The digestate is in fact an excellent fertilizer in which the nitrogen is present in a form that can be assimilated directly by plants.

According to a preferred solution, the container can be constituted by a box-like body made of cardboard provided with an internal lining layer made of a material such as ethylene vinyl alcohols (EVOH), polyamide (PA) and polyethylene (PE).

Such internal lining layer is waterproof, thus preventing the water naturally contained in vegetables and mushrooms from wetting the container, rendering it in practice unusable. In any case, the possibility that the container might be a tray provided with a closure film made of polymeric material is not excluded.

Once the food has been eaten, it is therefore possible to separate the container from the closure film for their separate recycling.

More particularly, the method of consuming a frozen packaged agricultural product is set out in appended claim 8.

It is appropriate to note that the entire production process of the frozen packaged agricultural food product according to the invention has a reduced environmental impact.

Since it is not possible to renounce the use of given active ingredients, their use rigidly regulated by a selective and repeatable protocol, as provided by the agronomic method described above, in fact allows to protect the harvests and obtain an agricultural product in which the residues are lower than the predefined threshold of 0.01 mg/kg, i.e., a safe product without compromising the harvest yield.

Such method, moreover, allows to have lower residues in the environment (air, water table and soils) and accordingly also on the health of human beings and of animals that are in continuous contact with such environment.

Moreover, the waste from the thermo-mechanical treatment of the vegetables and/or mushrooms, after their harvesting, instead of being introduced in the environment, is sent to a fermentation tank of the biogas production unit, where it is converted into digestate, which is used as fertilizer on the respective cultivation soil in a new step of cultivation of vegetable products.

Moreover, the container is constituted at least partially by recyclable and compostable materials, further reducing its environmental impact.

Advantageously, the frozen packaged agricultural food product features a production and utilization that have a reduced environmental impact.

Conveniently, the process of the invention incorporates an agro-industrial process with minimal environmental impact, suitable to minimize industrial waste.

Effectively, the process of the invention foresees applying a packaging that is recyclable and has a reduced environmental impact.

## Claims

1. A process for obtaining a frozen packaged agricultural food product, **characterized in that** it comprises
frozen vegetables and mushrooms, said process comprising the steps of:
- performing a preventive chemical, physical and pedologic analysis of the soils intended for cultivation, in order to identify at least partially their composition, humidity and temperature and verify the absence of pathogens, infesting organisms and pollutants;
- selecting, among natural seeds and mycelia, not genetically modified, the ones that are most suitable for the soil parameters identified previously;
- performing iterated periodic checks of the cultivated vegetables and mushrooms, which grow after seeding, in order to detect diseases and/or infestations thereof;
- circumscribing any plant protection treatment, to limited areas or minimizing the dosage thereof in view of the minimal incidence of the disease or infestation on the vegetables and mushrooms by using active ingredients selected among insecticides, herbicides, acaricides, limacides and fungicides;
- proximate to the harvest period, performing iterated periodic spot checks of the cultivated vegetables and mushrooms in order to measure the residual concentration of active plant protection ingredients;
- upon detection of the residual concentration of each active plant protection ingredient lower than a predefined threshold of 0.01 mg/kg, harvesting the cultivated vegetables and mushrooms,
- subjecting the vegetables and mushrooms to a thermo-mechanical treatment for the separation of an intermediate product, which has a residual concentration of each active plant protection ingredient lower than the predefined threshold, from a waste intended for an industrial transformation with low environmental impact;
- placing the intermediate product within a container constituted at least partially by at least one material selected among ethylene vinyl alcohols (EVOH), polyamide (PA), polyethylene (PE), lignin, Cartene, corn-derived polymers, plant-derived cellulose, paper, cardboard, said container being of a type that can be recycled at least partially, is resistant to microwaves and therefore suitable to be used as a cooking vessel and as a plate in which said vegetables contained therein are consumed after microwave cooking,
- thereby obtaining a packaged agricultural food product, and
- applying a freezing step.

2. The process according to claim 1, **characterized in that** the operations for measuring the residual concentration of active plant protection ingredients performed on the samples of said cultivated vegetables and mushrooms are performed in a laboratory by means of instruments selected among gas chromatographs with specific detectors selected from ECD, NPD, and FD, gas chromatographs coupled to mass spectrometers, liquid chromatographs with spectrophotometric diode array detectors , liquid chromatographs coupled to mass spectrometers of the UPLC-MS (Ultra Performance Liquid Chromatography - Mass Spectrometry) type and atomic absorption spectrophotometers HPLC (High Performance Liquid Chromatography).

3. The process according to claim 1, **characterized in that** said frozen vegetables are of the of the type of Liliaceae, Solanaceae, Umbelliferae,Asteraceae, Lamiaceae, Brassicaceae, Cucurbitaceae, Leguminosae and Chenopodiaceae, and frozen mushrooms of the Agaricaceae type.

4. The process according to one or more of the preceding claims, **characterized in that** said frozen vegetables are of the type selected among garlic, asparagus, basil, Swiss chard, broccoli, artichokes, carrots, cauliflowers, chicory, turnip greens, onion, chick peas, beans, Borlotti beans, green beans, broad beans, fennel, lentils, eggplant, peppers, potatoes, peas, tomatoes, leeks, parsley, celery, salad, endive, spinach, cabbages, pumpkin and zucchini.

5. The process according to claim 1, **characterized in that** said waste is fed into a fermentation tank of a biogas production unit, in said fermentation tank said waste is converted into digestate used as fertilizer on the respective cultivation soil in a new step of cultivation of vegetable products.

6. The process according to claim 5, **characterized in that** said digestate comprises a liquid phase and a solid phase, said liquid phase comprising ammonia nitrogen, N-NH4, phosphoric acid, H3PO4, phosphorus ions and salts, potassium ions and salts, calcium ions and salts, magnesium ions and salts, sulfates and trace elements, said solid phase comprising ammonia nitrogen.

7. The process according to claim 1, **characterized in that** said container is constituted by a box-like body made of cardboard provided with an internal lining layer made of a material such as ethylene vinyl alcohols (EVOH), polyamide (PA) and polyethylene (PE).

8. A method of consuming a frozen packaged agricultural food product, comprising the steps of:
- obtaining a frozen packaged agricultural food product according to the method of claim 1,
- storing said product in a freezer;
- extracting said product from the freezer;
- cooking said product in the microwave oven for a predefined time;
- extracting said product;
- leaving said product to rest for a predefined time;
- consuming said vegetables contained within said container directly from said container.

## Patentansprüche

1. Verfahren zur Herstellung eines gefrorenen verpackten landwirtschaftlichen Nahrungsmittelprodukts, **dadurch gekennzeichnet, dass** dieses gefrorenes Gemüse und Pilze aufweist, wobei das Verfahren die folgenden Schritte aufweist:
• Durchführung einer präventiven chemischen, physikalischen und bodenkundlichen Analyse der für den Anbau vorgesehenen Böden, um zumindest teilweise deren Zusammensetzung, Feuchtigkeit und Temperatur zu bestimmen und die Abwesenheit von Krankheitserregern, befallenden Organismen und Verunreinigungen zu überprüfen;
• Auswahl von natürlichem, nicht genetisch verändertem Saatgut und Myzelien, die für die zuvor ermittelten Bodenparameter am besten geeignet sind;
• Durchführung von wiederholten periodischen Kontrollen der kultivierten Gemüse und Pilze, die nach der Aussaat wachsen, um deren Krankheiten und/oder Befall zu erkennen;
• Beschränkung jeglicher Pflanzenschutzbehandlung auf begrenzte Flächen oder Minimierung der Dosierung im Hinblick auf das minimale Auftreten der Krankheit oder des Befalls auf dem Gemüse und den Pilzen durch Verwendung von Wirkstoffen, die aus Insektiziden, Herbiziden, Akariziden, Limaziden und Fungiziden ausgewählt werden;
• Durchführung von wiederholten periodischen Stichprobenkontrollen des angebauten Gemüses und der Pilze in der Nähe der Erntezeit, um die Restkonzentration der aktiven Pflanzenschutzmittel zu messen;
• bei Feststellung einer Restkonzentration jedes aktiven Pflanzenschutzmittels, die unter einem vordefinierten Schwellenwert von 0,01 mg/kg liegt, Ernten des angebauten Gemüses und der Pilze,
• Unterziehen des Gemüses und der Pilze einer thermomechanischen Behandlung zur Abtrennung eines Zwischenprodukts, das eine Restkonzentration jedes aktiven Pflanzenschutzinhaltsstoffs unter dem vordefinierten Schwellenwert aufweist, von einem Abfall, der für eine industrielle Verarbeitung mit geringer Umweltbelastung bestimmt ist;
• Einbringen des Zwischenprodukts in einen Behälter, der zumindest teilweise aus mindestens einem Material besteht, das ausgewählt ist aus Ethylenvinylalkoholen (EVOH), Polyamid (PA), Polyethylen (PE), Lignin, Cartene, von Pflanzen abgeleiteten Polymeren, von Pflanzen abgeleiteter Zellulose, Papier, Pappe, wobei der Behälter von einem Typ ist, der zumindest teilweise recycelt werden kann, mikrowellenbeständig ist und daher als Kochgefäß und als Teller verwendet werden kann, in dem das darin enthaltene Gemüse nach dem Mikrowellenkochen verzehrt wird,
• wodurch man ein verpacktes landwirtschaftliches Nahrungsmittel erhält, und
• Anwendung eines Gefrierschritts.

2. Verfahren gemäß Anspruch 1, **dadurch gekennzeichnet, dass** die an den Proben der kultivierten Gemüse und Pilze durchgeführten Operationen zur Messung der Restkonzentration der Pflanzenschutzmittelwirkstoffe in einem Labor mit Hilfe von Instrumenten durchgeführt werden, die ausgewählt werden aus Gaschromatographen mit spezifischen Detektoren, die aus ECD, NPD und FD ausgewählt werden, Gaschromatographen, die an Massenspektrometer gekoppelt sind, Flüssigkeitschromatographen mit spektrophotometrischen Diodenarraydetektoren, Flüssigkeitschromatographen, die an Massenspektrometer der UPLC-MS (Ultra Performance Liquid Chromatography - Mass Spectrometry) und Atomabsorptionsspektralphotometer HPLC (High Performance Liquid Chromatography).

3. Verfahren gemäß Anspruch 1, **dadurch gekennzeichnet, dass** das gefrorene Gemüse von der Art der Liliaceae, Solanaceae, Umbelliferae, Asteraceae, Lamiaceae, Brassicaceae, Cucurbitaceae, Leguminosae und Chenopodiaceae und die gefrorenen Pilze von der Art der Agaricaceae sind.

4. Verfahren gemäß einem oder mehreren der vorhergehenden Ansprüche, **dadurch gekennzeichnet, dass** das gefrorene Gemüse von der Art, die aus Knoblauch, Spargel, Basilikum, Mangold, Brokkoli, Artischocken, Karotten, Blumenkohl, Chicorée, Rüben, Zwiebeln, Kichererbsen, Bohnen, Borlotti-Bohnen, grüne Bohnen, Saubohnen, Fenchel, Linsen, Auberginen, Paprika, Kartoffeln, Erbsen, Tomaten, Lauch, Petersilie, Sellerie, Salat, Endivie, Spinat, Kohl, Kürbis und Zucchini ist.

5. Verfahren gemäß Anspruch 1, **dadurch gekennzeichnet, dass** die Abfälle in einen Gärbehälter einer Biogasanlage geleitet werden, wobei die Abfälle in dem Gärbehälter in Gärreste umgewandelt werden, die als Düngemittel auf dem jeweiligen Anbauboden in einem neuen Schritt des Anbaus von pflanzlichen Produkten verwendet werden.

6. Verfahren gemäß Anspruch 5, **dadurch gekennzeichnet, dass** das Gärgut eine flüssige Phase und eine feste Phase aufweist, wobei die flüssige Phase Ammoniakstickstoff, N-NH4, Phosphorsäure, H3PO4, Phosphorionen und -salze, Kaliumionen und -salze, Calciumionen und -salze, Magnesiumionen und - salze, Sulfate und Spurenelemente aufweist und die feste Phase Ammoniakstickstoff aufweist.

7. Verfahren gemäß Anspruch 1, **dadurch gekennzeichnet, dass** der Behälter aus einem kastenförmigen Körper aus Pappe besteht, der mit einer inneren Auskleidungsschicht aus einem Material wie Ethylenvinylalkoholen (EVOH), Polyamid (PA) und Polyethylen (PE) versehen ist.

8. Verfahren zum Verzehr eines gefrorenen verpackten landwirtschaftlichen Nahrungsmittels, das die folgenden Schritte aufweist:
• Herstellen eines gefrorenen verpackten landwirtschaftlichen Nahrungsmittels gemäß dem Verfahren nach Anspruch 1,
• Lagern des Produkts in einem Gefrierschrank;
• Entnahme des Produkts aus dem Gefrierschrank;
• Garen des Produkts im Mikrowellenherd für eine vordefinierte Zeit;
• Herausnehmen des Produkts;
• Ruhenlassen des Produkts für eine vorbestimmte Zeit;
• Verzehr des in dem Behälter enthaltenen Gemüses direkt aus dem Behälter.

## Revendications

1. Procédé d'obtention d'un produit alimentaire agricole emballé congelé, **caractérisé en ce qu'**il comprend
des légumes et des champignons congelés, ledit procédé comprenant les étapes de :
- réalisation d'une analyse chimique, physique et pédologique préventive des sols destinés à une culture, afin d'identifier au moins partiellement leur composition, leur humidité et leur température et de vérifier l'absence de pathogènes, d'organismes infestants et de polluants ;
- sélection, parmi des graines naturelles et des mycéliums, non génétiquement modifiés, de ceux qui sont les plus appropriés pour les paramètres du sol identifiés précédemment ;
- réalisation de contrôles périodiques itérés des légumes et champignons cultivés, qui croissent après l'ensemencement, afin de détecter des maladies et/ou des infestations de ceux-ci ;
- restriction de tout traitement de protection des plantes, à des zones limitées, ou réduction au minimum du dosage de celui-ci en vue de l'incidence minimale de la maladie ou de l'infestation sur les légumes et champignons en utilisant des principes actifs sélectionnés parmi les insecticides, les herbicides, les acaricides, les limacides et les fongicides ;
- à proximité de la période de récolte, réalisation de contrôles ponctuels périodiques itérés des légumes et champignons cultivés afin de mesurer la concentration résiduelle de principes actifs de protection des plantes ;
- lors de la détection de la concentration résiduelle de chaque principe actif de protection des plantes inférieure à un seuil prédéfini de 0,01 mg/kg, récolte des légumes et des champignons cultivés,
- soumission des légumes et des champignons à un traitement thermo-mécanique pour la séparation d'un produit intermédiaire, qui présente une concentration résiduelle de chaque principe actif de protection des plantes inférieure au seuil prédéfini, d'un déchet destiné à une transformation industrielle ayant un faible impact environnemental ;
- placement du produit intermédiaire à l'intérieur d'un récipient constitué au moins partiellement d'au moins un matériau sélectionné parmi les alcools vinyliques d'éthylène (EVOH), le polyamide (PA), le polyéthylène (PE), la lignine, le Cartene, les polymères dérivés du maïs, la cellulose dérivée de plantes, le papier, le carton, ledit récipient étant d'un type qui peut être recyclé au moins partiellement, est résistant aux micro-ondes et par conséquent approprié pour être utilisé en tant que récipient de cuisson et en tant qu'assiette dans laquelle lesdits légumes contenus dans celle-ci sont consommés après cuisson par micro-ondes,
- obtention consécutive d'un produit alimentaire agricole emballé, et
- application d'une étape de congélation.

2. Procédé selon la revendication 1, **caractérisé en ce que** les opérations de mesure de la concentration résiduelle de principes actifs de protection des plantes réalisées sur les échantillons desdits légumes et champignons cultivés sont réalisées dans un laboratoire au moyen d'instruments sélectionnés parmi les chromatographes en phase gazeuse avec des détecteurs spécifiques sélectionnés parmi l'ECD, le NPD et le FD, les chromatographes en phase gazeuse couplés à des spectromètres de masse, les chromatographes en phase liquide avec des détecteurs spectrophotométriques à réseau de diodes, les chromatographes en phase liquide couplés à des spectromètres de masse du type UPLC-MS (chromatographie liquide ultra-haute performance - spectrométrie de masse) et les spectrophotomètres à absorption atomique HPLC (chromatographie liquide haute performance).

3. Procédé selon la revendication 1, **caractérisé en ce que** lesdits légumes congelés sont du type Liliaceae, Solanaceae, Umbelliferae, Asteraceae, Lamiaceae, Brassicaceae, Cucurbitaceae, Leguminosae et Chenopodiaceae, et lesdits champignons congelés sont du type Agaricaceae.

4. Procédé selon une ou plusieurs des revendications précédentes, **caractérisé en ce que** lesdits légumes congelés sont du type sélectionné parmi l'ail, l'asperge, le basilic, la bette, le brocoli, les artichauts, les carottes, les choux-fleurs, le chicorée, les feuilles de navet, l'oignon, les pois chiches, les haricots, les haricots Borlotti, les haricots verts, les fèves, le fenouil, les lentilles, l'aubergine, les poivrons, les pommes de terre, les pois, les tomates, les poireaux, le persil, le céleri, la salade, l'endive, l'épinard, les choux, la citrouille et la courgette.

5. Procédé selon la revendication 1, **caractérisé en ce que** lesdits déchets sont introduits dans une cuve de fermentation d'une unité de production de biogaz, dans ladite cuve de fermentation lesdits déchets sont convertis en digestat utilisé en tant qu'engrais sur le sol de culture respectif dans une nouvelle étape de culture de produits végétaux.

6. Procédé selon la revendication 5, **caractérisé en ce que** ledit digestat comprend une phase liquide et une phase solide, ladite phase liquide comprenant de l'azote ammoniacal, du N-NH4, de l'acide phosphorique, du H3PO4, des ions et des sels de phosphore, des ions et des sels de potassium, des ions et des sels de calcium, des ions et des sels de magnésium, des sulfates et des éléments en trace, ladite phase solide comprenant de l'azote ammoniacal.

7. Procédé selon la revendication 1, **caractérisé en ce que** ledit récipient est constitué d'un corps en forme de boîte en carton doté d'une couche de revêtement interne en un matériau tel que des alcools vinyliques d'éthylène (EVOH), du polyamide (PA) et du polyéthylène (PE).

8. Procédé de consommation d'un produit alimentaire agricole emballé congelé, comprenant les étapes de :
- obtention d'un produit alimentaire agricole emballé congelé selon le procédé de la revendication 1,
- stockage dudit produit dans un congélateur ;
- extraction dudit produit du congélateur ;
- cuisson dudit produit dans le four à micro-ondes pendant un temps prédéfini ;
- extraction dudit produit ;
- fait de laisser ledit produit reposer pendant un temps prédéfini ;
- consommation desdits légumes contenus à l'intérieur dudit récipient directement à partir dudit récipient.
